# EUROPEAN PATENT APPLICATION

(11) **EP 4 475 240 A1**
(43) Date of publication of application: **11.12.2024**
(21) Application number: 23305904.7
(22) Date of filing: 07.06.2023
(51) Int. Cl.: H01M 10/04, H01M 50/103, H01M 10/0525

(54) **A BATTERY CELL IN A BATTERY CAN WITH POST-PROCESSED FACE RECESSES AND ASSOCIATED ASSEMBLING PROCESS AND PROCESS FOR CONTROLLING THE INTERNAL GAPS**

(71) Applicant: Automotive Cells Company SE, 33520 Bruges (FR)
(72) Inventor: CHOI, Hangjune, 33200 Bordeaux (FR)
(74) Representative: Alatis

(57) **Abstract**

The invention relates to a process for controlling internal gaps (18) inside a battery cell (1) between opposite main walls (3, 4) of a battery can (2) and at least one electrode stack (10) inserted in said battery can (2). Insertion gaps (16) are arranged between the opposite main walls (3, 4) of the battery can (2) and said at least one electrode stack (10) so that said at least one electrode stack (10) can be seamlessly inserted into the battery can (2) through an opening (8) formed on the top of said battery can (2). Then, a face recess (17) is plastically formed on at least one of said opposite main walls (3, 4) after that said opening (8) of said battery can (2) is sealed. A depth of said face recess (17) is reached during the face recess forming stage by applying a controlled pressure on said at least one of the opposite main walls (3, 4) so that predefined final internal gaps (18) are achieved between the opposite main walls (3, 4) of the battery can (2) and said at least one electrode stack (10).

## Description

### TECHNICAL FIELD OF THE INVENTION

The invention relates to the assembling of battery cells in which electrode stacks are-inserted into a battery can.

The invention relates more specifically to controlling the internal gaps between the battery can and the electrode stacks for optimizing the contact conditions between cathodes and anodes of the electrode stacks constituting electrochemical battery elements.

The invention applies in particular but not exclusively to the assembly of electrochemical battery cells for the automotive industry requiring an optimization of their electrochemical performance.

In the following, when it is referred to vertical and horizontal, front and rear, or top and bottom, this must be construed by reference to a battery cell in a position when mounted on the frame structure of a battery pack positioned in a car. A longitudinal axis and a transversal axis are to be construed by reference to the largest dimension of a battery cell.

### PRIOR ART

In the known prismatic battery cells, several electrode stacks are inserted into a metal battery can through its top opening. Then, electrical pads of the electrode stacks are electrically connected to electrical terminals of the battery cell located on a top cover assembly. Eventually the assembling process of the known battery cells is completed by sealing the top opening of the battery can with the top cover assembly.

In the known prismatic battery cells, a predefined insertion gap is required for enabling a seamless insertion of the electrode stacks into the battery can. The insertion gap is determined by the combinations of the manufacturing tolerances of the battery can and the electrode stacks. This insertion gap defines the internal gaps in the battery can between the main opposite walls of the battery can and the electrode stacks after that the battery can is sealed. Therefore, in the prior art, the internal gaps result from the random combinations of the actual size of the components of the battery cell.

The internal gaps within the battery cell determine substantially the pressure and gaps, called the contact condition, between the electrodes (cathode and anode) of the electrode stacks. This contact condition is key in the manifestation of a chemical phenomenon in the battery cell called "Li-Plating/Li-Deposition which deteriorates the electrochemical performance of the battery cell. The internal gaps depend on the actual thickness of the electrode stacks and the actual internal width between the opposite main walls of the battery can. Therefore, the actual internal gaps in the battery cell can significantly differ according to variation of the electrode stacks thickness and variation of the internal width of the battery can.

The internal gaps aiming to enable seamless insertion of the electrode stacks in the battery can, there is no control of the internal gaps for avoiding the Li-Plating.

### BRIEF DESCRIPTION OF THE INVENTION

However, it has been found that the more homogeneous and uniform the contact condition is in the battery cell, the better LI-Plating can be avoided.

Therefore, the invention aims at avoiding Li-plating by achieving an accurate control of the internal gaps for optimizing the contact conditions in a battery cell and thereby limiting or suppressing the occurrence of Li-Plating.

To that end, it is proposed according to a first aspect of the invention a process for controlling internal gaps inside a battery cell between opposite main walls of a battery can and at least one electrode stack inserted in said battery can wherein insertion gaps are arranged between the opposite main walls of the battery can and said at least one electrode stack so that said at least one electrode stack can be seamlessly inserted into the battery can through an opening formed on the top of said battery can. Then, a face recess is plastically formed on at least one of said opposite main walls after that said opening of said battery can is sealed. A depth of said face recess is reached during the face recess forming stage by applying a controlled pressure on said at least one of the opposite main walls so that predefined final internal gaps are achieved between the opposite main walls of the battery can and said at least one electrode stack.

Optionally, the battery cell is prismatic, preferably parallelepipedal, with the opening of the battery can arranged perpendicularly to the opposite main walls; and said at least one electrode stack formed as a case having a shape corresponding to the shape of the battery can is inserted through said opening parallelly to said opposite main walls.

Preferably, an insulation spacer is laid on the bottom of the battery can before said at least one electrode stack is inserted in the battery can; and/or said at least one electrode stack is inserted into an insulation sock arranged inside the battery can.

Optionally, two electrode stacks are inserted in the battery can so that internal gaps are arranged between said opposite main walls and the electrode stacks; and/or one face recess is formed on each one of the opposite main walls.

Optionally, said face recesses are formed on said opposite main walls by mirror-imaged punches squeezing the already sealed battery can perpendicularly to the opposite main walls until an amount of plastic deformation defined by the controlled pressure applied on said punches is reached.

It is proposed according to a second aspect of the invention, a process for assembling a battery cell wherein at least one electrode stack is inserted into a battery can along an insertion direction parallel to opposite main walls of said battery can through an opening formed on the top of said battery can; insertion gaps are arranged between said opposite main walls of said battery can and the said at least one electrode stack; and a top cover assembly is mechanically attached to the battery can for sealing said opening; said insertion gaps are sized so that said at least one electrode stack can be seamlessly inserted into said battery can; a face recess is plastically formed on at least one of said opposite main walls after that the opening of the battery can is sealed; and a depth of said face recess is reached during the face recess forming stage by applying a controlled pressure on said at least one of the opposite main walls so that predefined final internal gaps smaller than the insertion gaps are achieved between the opposite main walls of the battery can and said at least one electrode stack.

Optionally, the battery cell is prismatic, preferably parallelepipedal, with the opening of the battery can arranged perpendicularly to the opposite main walls; and said at least one electrode stack formed as a casing having a shape corresponding to the shape of the battery can is inserted through said opening parallelly to said opposite main walls.

Preferably, an insulation spacer is laid on the bottom of the battery can before said at least one electrode stack is inserted in the battery can; and/or said at least one electrode stack is inserted into an insulation sock arranged inside the battery can.

Optionally, two electrode stacks are inserted in the battery can so that the insertion gaps are arranged between said opposite main walls and the electrode stacks; and/or one face recess is formed on each one of the opposite main walls.

Preferably, said face recesses are formed on said opposite main walls by mirror-imaged punches squeezing the already sealed battery can perpendicularly to the opposite main walls until an amount of plastic deformation defined by the controlled pressure applied on said punches is reached.

It is proposed according to a second aspect of the invention, a battery cell comprising a battery can presenting an opening perpendicular to opposite main walls, a top cover assembly mechanically attached to the battery can for sealing said opening, and at least one electrode stack contained in said battery can and arranged parallelly to said opposite main walls. At least one of said opposite walls presents a post-formed face recess wherein a depth of said post-formed face recess is defined by monitoring a pressure applied on said at least one opposite walls for plastically forming said face recess so that predefined final internal final gaps are achieved between said opposite main walls and said at least one battery stacks.

Optionally, the battery cell is prismatic, preferably parallelepipedal, with the opening of the battery can arranged perpendicularly to the opposite main walls; and said at least one electrode stack is formed as a casing having a shape corresponding to the shape of the battery.

Preferably, an insulation spacer is located between the bottom of the battery can and the bottom of said at least one battery stack; and/or said at least one electrode stack is located in an insulation sock arranged inside the battery can.

Optionally, the battery cell comprises two electrode stacks with the internal gaps arranged between said opposite walls and each of the electrode stacks; each of the opposite main walls presents one face recess; and/or the face recess presents a slanted upper part.

Optionally, said top cover assembly comprises electrical terminals; said at least one electrode stack presents electrical tabs; and electrical collectors electrically connect said electrical tabs and said electrical terminals.

Other features and advantages of the present invention will emerge from the following description of embodiments of the invention provided as non-limitative examples for achieving various aspects of the invention.

The description refers to the attached figures which illustrate, also by way of example, an embodiment of the inventions:
- Figure 1A illustrates a perspective view of a battery cell;
- Figure 1B shows an exploded view of a battery cell;
- Figure 2A shows a transversal section view of a battery cell;
- Figure 2B shows a transversal view of a battery cell with face recesses;
- Figure 3 illustrates the execution of the face recess on a battery cell; and
- Figure 4 shows a perspective view of the battery with face recesses.

### DETAILED DESCRIPTION OF DIFFERENT EMBODIMENTS OF THE INVENTION

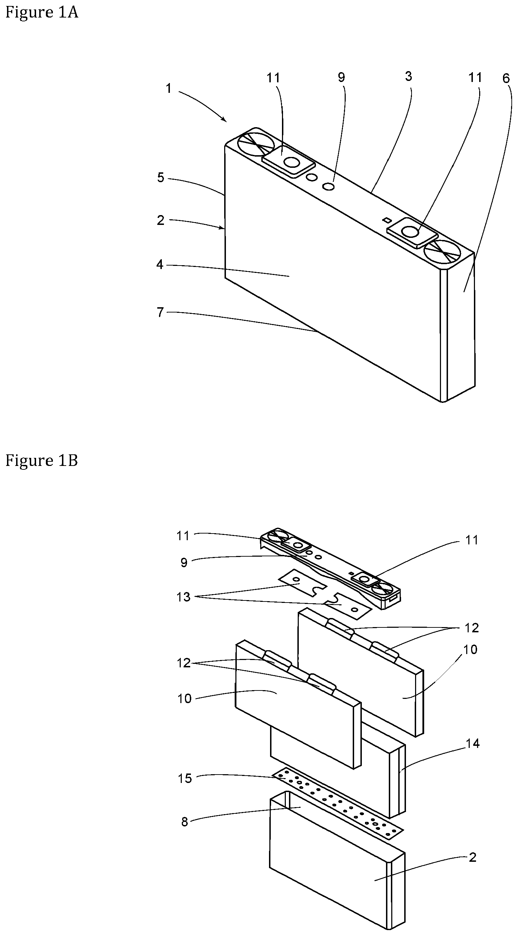

Figure 1A shows a prismatic battery cell 1 comprising a battery can 2 presenting a substantially parallelepipedal shape with two opposite main walls 3 and 4, two opposite lateral walls 5 and 6 and a bottom 7. As shown in figure 1B, the battery can 2 presents an opening 8 at its top part which is sealed by a top cover assembly 9. Electrode stacks 10 are located in the battery can 2. In the shown embodiment, the battery cell 1 contains two electrode stacks 10. However, the battery cell 1 could contain only one or more than two electrode stacks 10 according to the expected capacity of the battery cell 1.

The electrode stacks 10 are generally formed by a soft case presenting a shape corresponding to the shape of the battery can 2, here the electrode stacks are parallelepipedal. Electrical tabs 12 are located on the top side of the electrode stacks 10. Electrical collectors 13 are interposed between the electrical terminals 11 and the electrical tabs 12 for establishing an electrical connection between the electrode stacks 10 and the top cover assembly 9 despite the position variations of the electrical tabs 12 with respect to the electrical terminals 11.

Before being inserted into the battery can 2, the electrode stacks 10 can be packed into an insulation sock 14 for protecting the electrode stacks 10 inside the battery can 2. Moreover, an insulation spacer 15 can be laid inside the battery can 2 between the bottom 7 of the battery can 2 and the electrode stacks 10.

The top cover assembly 9 presents two electrical terminals 11 on its upper face. When the battery cell 1 is mounted in a battery pack (not shown), the electrical terminals 11 are connected to the positive and negative connection of a battery management unit (not shown) of the battery pack, and electrically connected to the other cells in parallel or in series.

The battery can 2 is generally made of metal like the top cover assembly 9 which can be welded, for example laser welded, by its edges to the edges of the opening 8 of the battery can 2. However, the battery can 2 can alternatively be made of a synthetic material and the top cover assembly 9 can be glued on the battery can 2 by their respective edges.

Each of the electrode stacks 10 contains at least one anode and one cathode electrodes electrically separated by a separator (not shown) arranged side by side in the battery can 2 parallelly to the front and rear main walls 4 and 3.

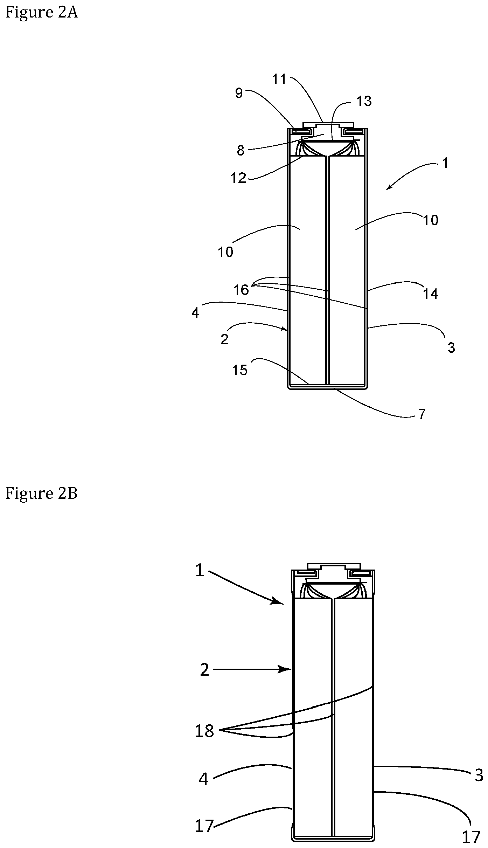

For assembling the battery cell 1, as shown in figure 2A, the electrode stacks 10 are inserted into the battery can 2 through the opening 8 in a direction parallel to the front and rear main walls 4 and 3. Optionally, the electrode stacks 10 are wrapped in the insulation sock 14 and an insulation spacer 15 is laid on the bottom 7 of the battery can 2 before that inserting the electrode stacks 10 into the battery can 2. Then, the electrical tabs 12 of the electrode stacks 10 are electrically connected to their respective electrical collector 13.

Once the electrode stacks 10 are placed in the battery can 2, the top cover assembly 9 is positioned on the opening 8 of the battery can 2 with the electrical terminals 11 positioned on their respective electrical collector 13. Then, the edges of the opening 8 are welded to the edges of the top cover assembly 9 for sealing the battery can 2.

In order to enable a seamless insertion of the electrode stacks 10 in the cavity of the battery can 2, there must be insertion gaps 16 between the front and rear main walls 4 and 3 of the battery can 2 and the electrode stacks 10. As the width of the cavity in the battery can 2 varies within the manufacturing tolerances of the battery can 2 and the thicknesses of the electrode stacks also vary, the insertion gaps must be large enough to accommodate the smallest allowable width of the battery can 2 and the largest allowable thickness of the electrode stacks 10. Therefore, due to the variation of the insertion gaps 16 the contact conditions, namely the compressive, between the main walls 3 and 4 of the battery can and the electrode stacks 10 are not uniform and homogenous. This heterogenous contact conditions within the battery can 10 does not allow a uniform and homogeneous functioning of the electrodes in the electrode stacks as indicated in the introductory part of the description.

In order to provide an accurate control of the internal gaps within the battery can 2, once the battery can 2 is sealed, a face recess 17 is formed on the front and rear main walls 4 and 3 for squeezing the main walls 3 and 4 of the battery can against the electrode stacks 10. A controlled pressure is applied on the main walls 3 and 4 during the face recess 17 forming stage so that final internal gaps 18 can be achieved between the front and main walls 4 and 3 of the battery can 2 and the electrode stacks 10. Consequently, the targeted final internal gaps 18 are more accurately achieved irrespectively of the variations of the width of the cavity in the battery can and the thickness of the electrode stacks 10 because the face recesses 18 are formed after the battery cell assembly. Thus, it takes into account the actual dimensions of the battery can 2 and the electrode stacks 10 and the final internal gaps are only defined by the controlled pressure applied on the main walls 3 and 4 of the battery case.

Consequently, the depth of the face recesses 17 may vary between different battery cells 1 according to the actual sizes of their components. However, the final internal gaps 18 and, thus, the contact conditions in the battery can 2 are more uniform and homogeneous so that the electrochemical performances of the battery cell 1 can be nearer to its optimum condition, and the occurrence of LI-Plating phenomenon can be significantly reduced.

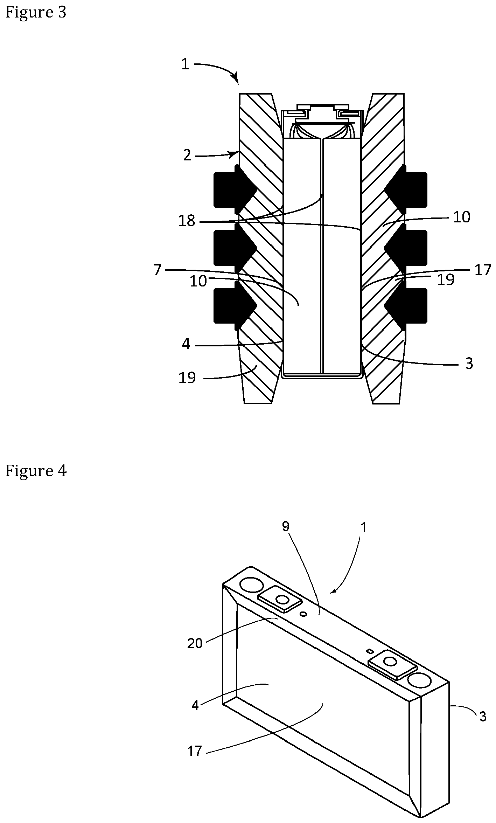

The assembling process of the battery cell 1 initiates with the insertion of the electrode stacks 10 in the battery can 2 with or without the insulation sock 14 and the insulation spacer 15. Once all the components are arranged in the battery can 2 and the electrical connections have been established between the electrical terminals 11 and the electrical tabs 12, the top cover assembly 9 is joined to the edges of the opening 8 for sealing the battery can by laser welding. Then, the face recesses 17 are formed on the front and rear main walls 4 and 3 of the battery can 2 as illustrated in figure 3. In the illustrated embodiment, one face recess 17 is symmetrically formed on each of the opposite main walls 3 and 4 for achieving the desired final internal gaps 18 in the battery cell 1. However, these desired final internal gaps can alternatively be achieved by forming only one face recess on one of the opposite main walls 3 or 4 (not shown).

As shown in figure 3, the face recesses get formed by a pair of punches 19. The punches 19 are mirror-imaged to each other, and the sealed parallelepipedal battery can 2 gets squeezed by the punches 19 with a predefined pressure for controlling the depth of the face recesses 17 formed on the opposite main walls 3 and 4 of the battery can 2 to achieve accurately the desired final internal gaps 18. Consequently, the depth of the face recesses 17 formed on the opposite main walls 3 and 4 of the battery can 2 differ from a battery cell to another while the final internal gaps 18 are the same.

By controlling the pressure applied to form the face recesses 17 by the punches 19 on the main walls 3 and 4 of the battery can 2, the internal gaps inside the battery cell 1 are accurately controlled for achieving the desired contact conditions between the electrodes in the electrode stacks 10, thereby helping to reduce the Li-Plating phenomenon on the electrodes of the battery cell 1.

After the deformation of the opposite walls 3 and 4 of the battery can 2 for forming the face recess, the final internal gaps 18 inside the battery can 2 between the internal face of the opposite main walls 3 and 4, and the electrode stacks 10, including the insulation sock 14 shrink significantly compared to the insertion gaps 16. The accurate control of the final internal gaps 18 remaining inside the battery can 2 after forming the face recess 17 significantly improves the contact conditions between the cathode and anode electrodes inside the electrode stacks 10 which are more uniform and homogeneous. Thus, this improved control of the final internal gaps 18 secure a more precise and stable functioning of the battery cells 1. Meanwhile, the insertion of the electrode stacks 10 in the battery can 2 is not impeded because the size of the insertion gaps 16 is originally defined for ensuring a seamless insertion of the soft cases forming the electrode stacks 10 through the opening 8 of the battery can 2. The battery cell 1 described above differs from known battery cells in the accurately controlled size of the final internal gaps 18 which is featured by variation of the depth of the face recesses 17 from a battery cell to another. The variation of the depth of the face recesses 17 does not depend on the usual manufacturing tolerance but on the actual width of the cavity inside the battery can and the actual thickness of the electrode stacks 10.

As explained above, the post-forming of the face recesses 17 allows the accurate control of the final internal gaps 18 despite the varying thickness of the electrode stack 10 and the varying width of the cavity of the battery can. The final internal gaps 18 are self-adapted to these multiple size variations by monitoring the pressure applied on the opposite main walls 3 and 4 by the punches 19 during the face recess 17 post-forming stage. Electrode stacks 10 should not be too compressed inside the battery can 2 but also not too loose while there should be initially sufficient clearance between the internal faces of the opposite main 3 and 4 for allowing a seamless insertion of the electrode stacks 10 in the battery can 2. Post-forming face recesses 17 on the opposite main walls 3 and 4 and monitoring the pressure applied on the battery can opposite main faces solve these problems. Manufacturing tolerances are key issues for achieving an accurate control of the internal gaps remaining in the battery cell after its assembling, this issue is overcome the problem by the process described above.

The battery cell 1 after formation of the face recesses 17 on the opposite main walls 3 and 4 of the battery can 2 is shown in figure 4. The active parts of the punches 19 press a central portion of the opposite main walls 3 and 4 forming thereby slanted lateral parts around the pressed central portion. An upper slanted part 20 is formed on the upper edges of the opposite main walls 3 and 4 along the opening 8. The lateral gaps between the left and right lateral walls 5 and 6 and the left and right side faces of the electrode stacks are identical. The bottom gap between the bottom 7 and the lower edge of the electrodes stacks is more or less the same as the lateral gaps. However, the top gap between the top cover and the upper edge of the electrodes stacks is bigger than the lateral and bottom gaps as many mechanical parts are located within the top gap. The main objective of the face recesses post-processing is to provide proper contact conditions between the electrodes over their entire area. Therefore, the face recesses 17 resulting from the post-processing needs to be as close as possible of the electrodes stacks. Therefore, this post-processing results in slanted faces 20 in the top area of the battery can 2 which are wider than the slanted faces in the bottom and lateral areas of the battery can 2 as shown in figure 4.

Controlling the depth created by the face recess process is key to the present invention, as this plastically deformed depth needs to be tuned for each individual cell. Several technical options are available to realize this process adaptation. In a first option, the pressure application tool presents a calibrated flat embossment in the center, so that the outside part of the tool applies no pressure on the cell, while the center embossment applies a calibrated fixed pressure defined by the height difference between the tool embossment part and outside part. While this tool itself cannot apply a variable pressure, several calibrated tools can be realized; then, a non-contact metrology tool (such as using acoustic sensing, electro-magnetic sensing, X-ray sensing, etc.) measures the residual gap. A second option to adapt the forming process to each residual gap of cells is to use a force sensing element to detect when the tool comes into contact with the stack. Then, once contact is detected, the tool can release the applied force, and the metal is then plastically deformed, but a residual gap is formed between the stack and the can thanks to the elastic property of the deformed metal. The can metal being well known, the expected elastic retraction after the face forming process can be easily predicted, and thereby a fixed gap is formed irrespectively of the initial distance between the stack and the can main faces. Both the first and second implementation options can be performed by using a non-mechanical embossment, such as an electro-magnetic tool which can plastically deform metals without contact.

The above description and the figures show different embodiments of the specific aspects of the invention, in particular the battery cells could have different prismatic shape than parallelepipedal, for example with lateral walls formed by two or three sides. The battery cell could even have a non-prismatic shape, for example with semi-cylindrical lateral walls for joining the opposite main walls 3 and 4 instead of the flat lateral walls 5 and 6. The battery can 2 is conventionally made of metal. However, it could alternatively be made of a plastically deformable synthetic material charged with conductive particles, such as carbon, for making the synthetic material conductive. The battery cell described above aims at being implemented in a battery pack of a vehicle. However, it could be used alone and implemented in other contexts requiring significantly less energy than a vehicle.

## Claims

1. Process for controlling internal gaps inside a battery cell (1) between opposite main walls (3, 4) of a battery can (2) and at least one electrode stack (10) inserted in said battery can (2) wherein:
- insertion gaps (16) are arranged between the opposite main walls (3, 4) of the battery can (2) and said at least one electrode stack (10) so that said at least one electrode stack (10) can be seamlessly inserted into the battery can (2) through an opening (8) formed on the top of said battery can (2);
- a face recess (17) is plastically formed on at least one of said opposite main walls (3, 4) after that said opening (8) of said battery can (2) is sealed;
- a depth of said face recess (17) is reached during the face recess forming stage by applying a controlled pressure on said at least one of the opposite main walls (3, 4) so that predefined final internal gaps (18) are achieved between the opposite main walls (3, 4) of the battery can (2) and said at least one electrode stack (10).

2. Process for controlling the gaps inside a battery cell according to the preceding claim, wherein:
- the battery cell (1) is prismatic, preferably parallelepipedal, with the opening (8) of the battery can arranged perpendicularly to the opposite main walls (3, 4); and
- said at least one electrode stack (10) formed as a case having a shape corresponding to the shape of the battery can (2) is inserted through said opening (8) parallelly to said opposite main walls (3, 4).

3. Process for controlling the gaps inside a battery cell according to any one of the preceding claims, wherein:
- an insulation spacer (15) is laid on the bottom (7) of the battery can (2) before said at least one electrode stack (10) is inserted in the battery can (2); and/or
- said at least one electrode stack (10) is inserted into an insulation sock (14) arranged inside the battery can (2).

4. Process for controlling the gaps inside a battery cell according to any one of the preceding claims, wherein:
- two electrode stacks (10) are inserted in the battery can (2) so that insertion gaps (16) are arranged between said opposite main walls (3, 4) and the electrode stacks (10); and/or
- one face recess (17) is formed on each one of the opposite main walls (3, 4).

5. Process for controlling the gaps inside a battery cell according to the preceding claim, wherein said face recesses (17) are formed on said opposite main walls (3, 4) by mirror-imaged punches (19) squeezing the already sealed battery can (2) perpendicularly to the opposite main walls (3, 4) until an amount of plastic deformation defined by the controlled pressure applied on said punches (19) is reached.

6. Process for assembling a battery cell wherein:
- at least one electrode stack (10) is inserted into a battery can (2) along an insertion direction parallel to opposite main walls (3, 4) of said battery can (2) through an opening (8) formed on the top of said battery can (2);
- insertion gaps (16) are arranged between said opposite main walls (3, 4) of said battery can (2) and the said at least one electrode stack (10); and
- a top cover assembly (9) is mechanically attached to the battery can (2) for sealing said opening (8);
- said insertion gaps (16) are sized so that said at least one electrode stack (10) can be seamlessly inserted into said battery can (2);
- a face recess (17) is plastically formed on at least one of said opposite main walls (3, 4) after that the opening (2) of the battery can (2) is sealed; and
- a depth of said face recess (17) is reached during the face recess forming stage by applying a controlled pressure on said at least one of the opposite main walls (3, 4) so that predefined final internal gaps (18) smaller than the insertion gaps (16) are achieved between the opposite main walls (3, 4) of the battery can (2) and said at least one electrode stack (10).

7. Process for assembling a prismatic battery cell according to the preceding claim, wherein:
- the battery cell (1) is prismatic, preferably parallelepipedal, with the opening (8) of the battery can (2) arranged perpendicularly to the opposite main walls (3,4); and
- said at least one electrode stack (10) formed as a casing having a shape corresponding to the shape of the battery can (2) is inserted through said opening (8) parallelly to said opposite main walls (3, 4).

8. Process for assembling a prismatic battery cell according to any one of the preceding claims, wherein:
- an insulation spacer (15) is laid on the bottom (7) of the battery can (2) before said at least one electrode stack (10) is inserted in the battery can (2); and/or
- said at least one electrode stack (10) is inserted into an insulation sock (14) arranged inside the battery can (2).

9. Process for assembling a prismatic battery cell according to any one of the preceding claims, wherein:
- two electrode stacks (10) are inserted in the battery can (2) so that the insertion gaps are arranged between said opposite main walls (3, 4) and the electrode stacks (10); and/or
- one face recess (17) is formed on each one of the opposite main walls (3, 4).

10. Process for assembling a prismatic battery cell according to any one of the preceding claims, wherein said face recesses (17) are formed on said opposite main walls (3, 4) by mirror-imaged punches (19) squeezing the already sealed battery can (2) perpendicularly to the opposite main walls (3, 4) until an amount of plastic deformation defined by the controlled pressure applied on said punches (19) is reached.

11. Battery cell comprising a battery can (2) presenting an opening (8) perpendicular to opposite main walls (3, 4), a top cover assembly (9) mechanically attached to the battery can (2) for sealing said opening (8), and at least one electrode stack (10) contained in said battery can (2) and arranged parallelly to said opposite main walls (3, 4),
**characterized in that**:
at least one of said opposite walls (3, 4) presents a post-formed face recess (17) wherein a depth of said post-formed face recess (17) is defined by monitoring a pressure applied on said at least one opposite walls (3, 4) for plastically forming said face recess (17) so that predefined final internal gaps (18) are achieved between said opposite main walls (3, 4) and said at least one battery stacks (10).

12. Battery cell according to the preceding claim wherein:
- the battery cell (1) is prismatic, preferably parallelepipedal, with the opening (8) of the battery can (2) arranged perpendicularly to the opposite main walls (3, 4); and
- said at least one electrode stack (10) is formed as a casing having a shape corresponding to the shape of the battery can (2).

13. Battery cell according to any one of the preceding claims wherein:
- an insulation spacer (15) is located between the bottom (7) of the battery can (2) and the bottom of said at least one battery stack (10); and/or
- said at least one electrode stack (10) is located in an insulation sock (14) arranged inside the battery can (2).

14. Battery cell according to any one of the preceding claims wherein:
- the battery cell (1) comprises two electrode stacks (10) with the final internal gaps (18) arranged between said opposite walls (3, 4) and each of the electrode stacks (10);
- each of the opposite main walls (3, 4) presents one face recess (17); and/or
- the face recess (17) presents a slanted upper part (20).

15. Battery cell according to any one of the preceding claims wherein:
- said top cover assembly (9) comprises electrical terminals (11);
- said at least one electrode stack (10) presents electrical tabs (12); and
- electrical collectors (13) electrically connect said electrical tabs (12) and said electrical terminals (11).
